(19) Europäisches Patentamt
European Patent Office
Office européen des brevets

(11) **EP 0 984 261 B1**

(12) **EUROPEAN PATENT SPECIFICATION**

(45) Date of publication and mention
of the grant of the patent:
**12.08.2009 Bulletin 2009/33**

(51) Int Cl.:
**G01M 17/02** (2006.01)

(21) Application number: **99306798.2**

(22) Date of filing: **27.08.1999**

(54) **Effective road profile simulation method and system with tyre loss-of-contact compensation**

Verfahren zur effektiven Simulation von Strassenprofil und system mit Kompensation von Reifenkontaktverlust

Méthode de simulation effective du profile de route et système de compensation de perte de contacte des roues

(84) Designated Contracting States:
**BE DE FR GB**

(30) Priority: **31.08.1998 US 146390**

(43) Date of publication of application:
**08.03.2000 Bulletin 2000/10**

(73) Proprietor: **Ford Global Technologies, Inc., A subsidiary of Ford Motor Company Dearborn, Michigan 48126 (US)**

(72) Inventors:
• **Fricke, David M.**
  **Howell,**
  **Michigan 48843 (US)**
• **Saleem, Fayyaz**
  **Taylor,**
  **Michigan 48180 (US)**
• **Mianzo, Lawrence A.**
  **Plymouth,**
  **Michigan 48170 (US)**

• **Chabaan, Rakan C.**
  **Farmigton Hills,**
  **Michigan 48335 (US)**

(74) Representative: **Messulam, Alec Moses et al A. Messulam & Co. Ltd. 43-45 High Road Bushey Heath Hertfordshire WD23 1EE (GB)**

(56) References cited:
**EP-A- 0 893 679      US-A- 3 718 033**
**US-A- 4 981 034      US-A- 5 003 819**
**US-A- 5 065 618      US-A- 5 533 403**
**US-A- 5 610 330**

• **PATENT ABSTRACTS OF JAPAN vol. 1999, no. 12, 29 October 1999 (1999-10-29) & JP 11 173952 A (T &T:KK; SAMUTEC:KK), 2 July 1999 (1999-07-02)**
• **PATENT ABSTRACTS OF JAPAN vol. 1999, no. 05, 31 May 1999 (1999-05-31) & JP 11 051820 A (FORD GLOBAL TECHNOL INC), 26 February 1999 (1999-02-26)**

**Description**

The present invention relates generally to automotive vehicle road simulation, and more particularly to automotive simulation through use of spindle-coupled road simulators.

An effective road profile control (ERPC) process for use with spindle-coupled road simulators, as disclosed in US patent 5,610,330, assigned to the assignee of the present invention and incorporated herein by reference, provides a method by which measured vehicle data from a first vehicle can be used to develop a valid simulation test for subsequent vehicles. The process uses an analytical tyre model to predict a tyre profile which is consistent with vehicle dynamics, including spindle force and acceleration, from the first vehicle. In developing the simulation test on subsequent vehicles, a second tyre model is used as an observer in the feedback-control process, generating a test where the predicted tyre profile of the measurement and test vehicles are the same.

This approach to simulation test control assumes that the tyre profile, longitudinal, lateral, and vertical displacements, for example, is independent of the vehicle and only a function of the road surface. This assumption is normally valid for most regions of a measured road surface, since the tyre profile is normally being directly loaded by the road, and the tyre profile and the road profile are coincidental. For some road events, however, the tyre profile can be independent of the road profile. These events may include tyre hop, where the tyre loses vertical contact with the road surface. In this situation, the tyre is momentarily free of the influence of the road profile, but typically quickly reengages with the road.

Another potential problem with the assumption that the tyre profile matches the road profile occurs in the longitudinal control axis. A free rolling tyre on a smooth surface, such as between pot holes or bumps, can have tyre profile motion which is a function of only the vehicle. Transient response oscillations of the suspension following an impact event dictated by the dynamics of the suspension alone, which may be dependent on suspension mass, stiffness, damping and other parameters. Under these conditions, forcing a calculated longitudinal tyre profile to match a previous vehicles tyre profile may not be accurate.

While the above recited patent represents a significant advance in the art, further advances are needed to overcome the above described problems.

The present invention provides an ERPC process having loss-of-contact compensation. The process uses the tyre deflection obtained during measurement of a vehicle's tyre profile calculation to detect and flag regions where the tyre profile is not a function of the road input. When a net tyre deflection is zero, the tyre profile motion is governed only by the free dynamic response of the suspension. Zero net tyre deflection is common in the vertical direction during brief periods of tyre hop. It is also common for longitudinal profile motion during free rolling between impact events. Proper simulation testing over these time regions on subsequent vehicles requires a modification in the calculation of the feedback parameter to avoid incorrectly loading a test vehicle.

The simulation control feedback is normally the calculated tyre profile. During loss-of-contact regions, the corrected tyre profile cannot be determined. It can be assumed, however, that during these time regions the correct tyre profile motion will be a function of free suspension transient response, as on the original measurement vehicle. To achieve a proper simulation during these regions, tyre profile error is determined based upon calculated tyre deflection, rather than the difference between desired and achieved higher profile displacement. The objective in a loss-of-contact region is to generate a test input that is consistent with zero net tyre deflection, that is, a free transient response condition. Effectively, this generates a condition where only the reflected inertia of the virtual tyre acts to externally load the vehicle spindle.

There have been proposals to obviate this problem, such as that taught by US4,981,034. This replaces the vertical link of the spindle coupled road simulation machine with fluid pressure actuator loading through a compressible fluid cushion to simulate the loading impedance of a tyre. The downside of this is the very high material cost involved, the additional complexity and wear, the setting up cost and the need to similarly alter each test facility in order that results are comparable.

According to first and second aspects of the present invention, there is provided a method of controlling an automotive vehicle spindle-coupled road simulator as set forth in claims 1 and 2, respectively, of the claims appended hereto.

According to a third aspect of the present invention, there is provided a system for simulating a road test of an automotive vehicle as set forth in claim 9 of the claims appended hereto.

An advantage of the present invention is a method for controlling an automotive vehicle spindle-coupled road simulator which includes tyre loss-of-contact with a road surface during simulation.

A feature of a method embodying the present invention is detection of loss-of-contact of a tyre in a predetermined effective tyre profile and selection of an effective tyre profile error from either a generated output from a simulator control plant representing a tyre in contact with the road surface, and a calculated tyre deflection representing a tyre having lost contact with the road surface.

The invention will now be described, by way of example, with reference to the accompanying drawings, in which:

Fig. 1 is a system view of the present invention showing a spindle-coupled simulator controlled by loss-of-contact models developed from an effective road profile, the system being computer controlled;

Fig. 2 is a flow chart of an effective road profile simulation method with tyre loss-of-contact compensation according to the present invention;

Fig. 3 is a graph showing a road event in which a vehicle tyre loses contact with a road surface;

Figs 4A-4C are graphs showing a tyre deflection, a tyre profile, and an effective road profile flag, respectively, for a vertical component of a vehicle tyre position during the road event of Fig. 3; and

Figs 5A-5C are graphs showing tyre deflection, tyre profile, and an effective road profile flag, respectively, for a longitudinal component of a vehicle tyre position during the road event of Fig. 3.

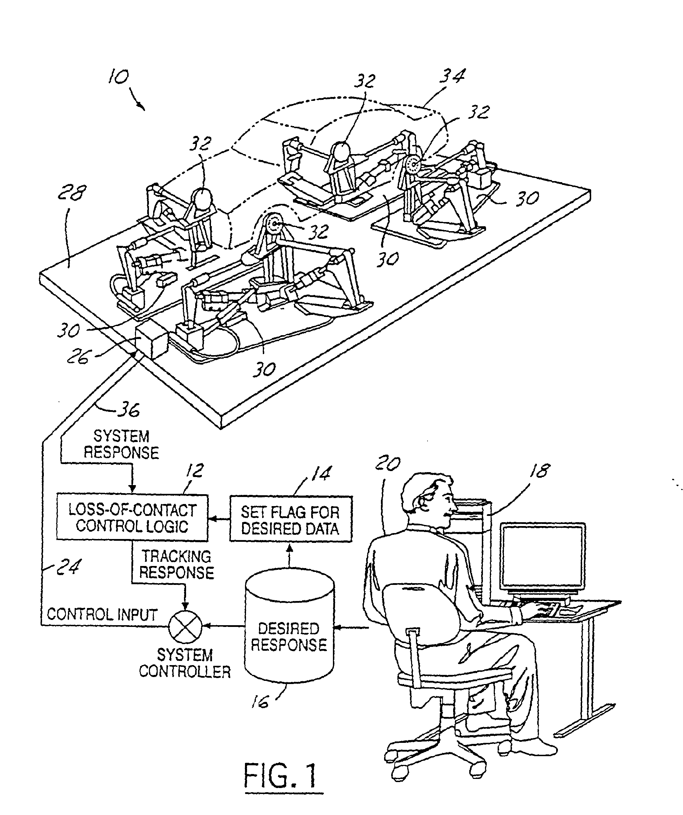

Turning now to the drawings, and in particular to Fig. 1 thereof, a spindle-coupled simulator 10 is shown with a computer-implemented system for control thereof. The computer-implemented control features a loss-of-contact tyre model 12, which is triggered based upon flags set for desired data, indicated at 14. The flags in box 14 are set based upon a desired response 16 obtained from proving ground road tests, as further described below. The loss-of-contact control method is implemented on a computer 18 and can be monitored and/or modified by a user 20. A summer 22 develops an input 24 from the loss-of-contact models 12 and the desired response 16, and the sum 24 is then input into a control module 26 on a platform 28 of the spindle-coupled simulator 10. The spindle-coupled simulator 10 has a simulator controlled apparatus 30 connected at each vehicle spindle 32 after the tyres of a vehicle 34 have been removed. The spindle-coupled simulator 10 can introduce from three to five forces and moments at each vehicle speed spindle 32 so as to comprehensively test the complete vehicle for structural durability, except for internal powertrain components. An achieved response 36 from the spindle-coupled simulator 10 is input to the loss-of-contact model 12 to complete the loop.

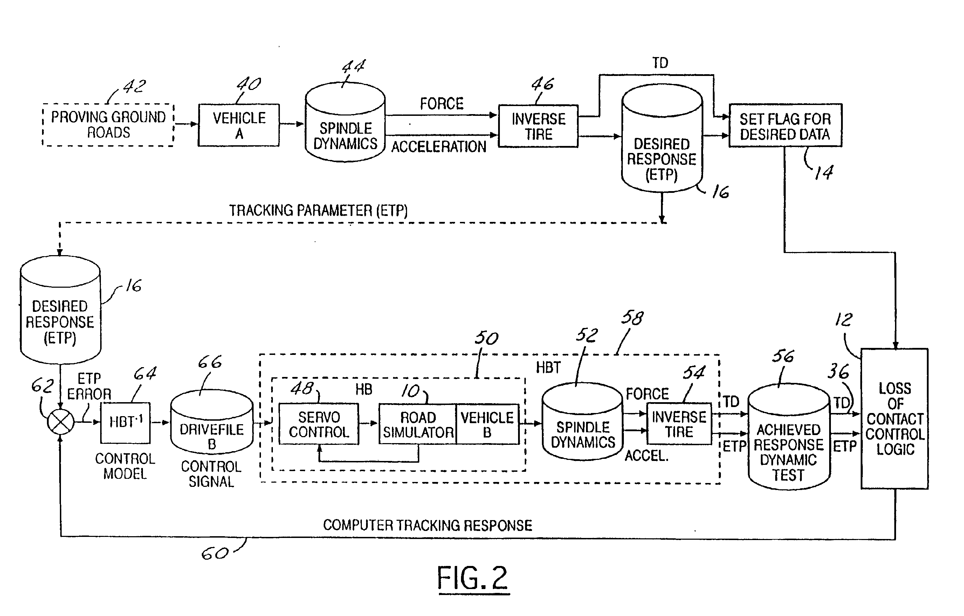

Turning now to Fig. 2, a flow chart showing a preferred embodiment of the method of the present invention is shown. A vehicle A, indicated at 40, is driven over a test road at proving ground facilities, indicated at 42. Spindle dynamics data at 44 is collected and used with an inverse tyre model, indicated at 46, to develop a generic effective road profile, or desired response, 16. From the desired response 16, an effective road profile flag is set for a vertical and longitudinal component of the tyre position, as indicated in box 14 and further discussed below.

Vehicle B, which has a different configuration than that of Vehicle A, is coupled to the spindle-coupled simulator 10. A servo-controller 48, such as a conventional servo-control apparatus, is used for control of the road simulator. System modelling of the Vehicle B, the road simulator 10, and the servo-controller 48, collectively comprise a transfer function HB, indicated generally at 50. Spindle dynamics data for Vehicle B, indicated at cylinder 52, are generated from the road simulator 10 with Vehicle B attached thereto. The spindle dynamics data 52 is then used in conjunction with the inverse tyre model 54 for Vehicle B to yield and an achieved response 56. The transfer function HB, the spindle dynamics 52, and the inverse tyre model 54, collectively comprise a transfer function HBT, indicated generally at 58.

A signal 36 representing the achieved response 56 is then used in conjunction with the loss-of-contact models 12, further discussed below, to produce a composite feedback 60. A sum between the desired response 16 and the composite feedback 60 is calculated at the summer 62 and is operated on by an inverse transfer function $HBT_1$, indicated at 64, before being written to a drive file B, indicated generally at cylinder 66. The set of control signals thus generated in the drive file B represents a unique control input for a particular simulator-vehicle-controller combination. The Vehicle B can then be further tested while coupled to the spindle-coupled simulator without the need for driving it over the test road.

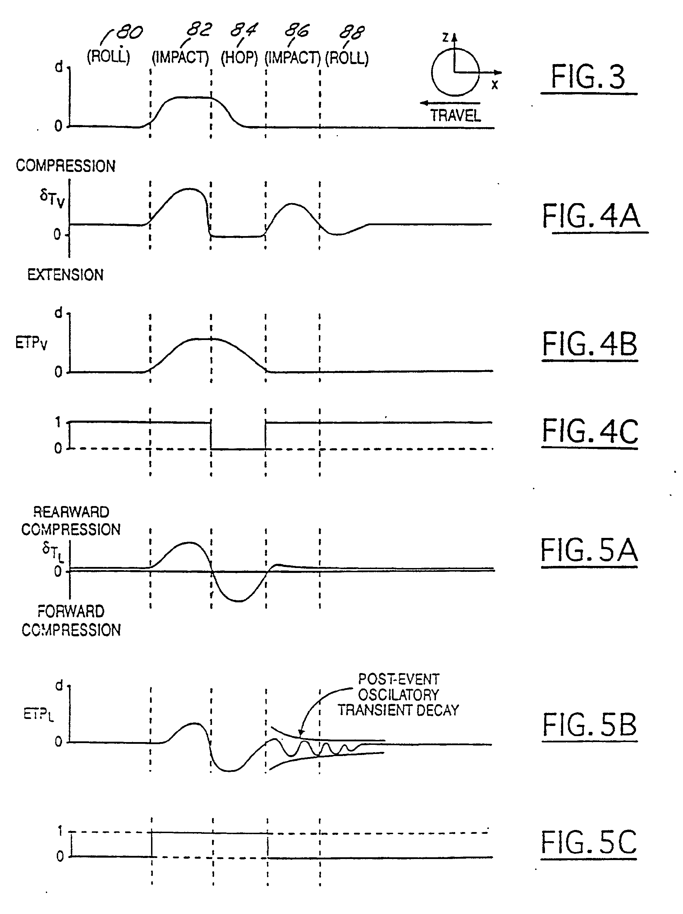

Turning now to Fig. 3, a "road event" resulting in tyre loss-of-contact with a road surface is shown in graphical form. Such an event may be representative of, for example, a bump or other obstruction in the road surface which causes a vehicle tyre to temporarily depart from the surface. The road event can be separated into five sections, including a pre-impact role section 80, a bump impact section 82, a hub section 84, a road impact section 86, and a post-impact role section 88. Those skilled in the art will recognise that the road event graphically depicted in Fig. 3 is but one of many road events for which the loss-of-contact method and system described herein is applicable. The horizontal access of the graph is longitudinal travel, in the x-direction, while the vertical access represents vertical vehicle spindle displacement, in the z-direction.

In Fig. 4A, a vertical tyre deflection graph is shown separated into road event sections corresponding to those described above with reference to Fig. 3. The horizontal access corresponds to longitudinal vehicle travel, and the vertical access is a computed vertical tyre deflection.

The vertical tyre deflection is calculated as follows:

$$\delta_{Tv} = [F_{vert. - mz}] \; * \; k_T^{-1},$$

where, $\delta_{TV}$ = vertical tyre deflection, $F_{vert.}$ = vertical force measured at a vehicle spindle, m = at spindle-coupled mass, z = vertical spindle acceleration, and $k_T$ = a tyre stiffness constant.

From Fig. 4A, it can be seen that the vertical tyre deflection is normally in compression during pre-impact and post-impact role sections of a road event. This compression is due to vehicle weight on the tyres. During the impact sections of the road event, sections 82 and 86 of Fig. 3, the vertical tyre deflection is in greater compression than during the role sections 80 and 88, respectively. The hop section 84 is of particular interest, since during that section of the road event, the vertical tyre deflection is zero since the vehicle mass is no longer loading the tyre against the road surface. That is, the tyre is no longer in contact with the road surface.

As shown in Fig. 4B, a vertical tyre profile can be determined as follows:

$$ETP_v = \delta_{Tv} + z$$

where, z = vertical spindle displacement and $ETP_v$ = vertical effective tyre profile. This vertical effective tyre profile can, for the most part, be used as the effective road profile when the net vertical deflection is greater than zero. During those periods, an effective road profile flag is set equal to one. However, when the net tyre deflection is less than or equal to zero, the effective road profile in the vertical direction is undefined since the vehicle tyre is no longer in contact with the road surface. During that time, the effective road profile flag is set equal to zero, as seen in Fig. 4C. These flags are used a shown in box 14 of Fig. 2 to select a signal for an effective tyre profile air, or composite feedback 60, between a generated output from the control loop representing a tyre in contact with the road surface and a tyre deflection representing a tyre having lost contact with the road surface. This loss-of -contact model, box 12 of Fig. 2, can be represented as follows:

$$ETP_{error} = ETP_{desired} * ERP\text{-}FLAG_{desired} * ERP\text{-}FLAG_{achieved} \quad (desired$$
$$response)$$
$$- ETP_{achieved} * ERP\text{-}FLAG_{desired} * ERP\text{-}FLAG_{achieved} \quad (composite$$
$$tracking\ response)$$
$$- \delta_{Tv} * [1 - ERP\text{-}FLAG_{achieved}],$$

where, $ETP_{desired}$ = the effective tyre profile from the desired response in cylinder 16 of Fig. 2, $ETP_{achieved}$ = the effective tyre profile from the achieved response of the dynamic test in cylinder 56 of Fig. 2, $ERP\text{-}FLAG_{desired}$ = the effective road profile flag, as described above, for the desired response, and $ERP\text{-}FLAG_{desired}$ = the effective road profile flag as described above for the achieved response. The effect of this loss-of-contact model is to determine a composite response error for an effective tyre profile using the difference between the desired and the desired achieved tyre profiles as an input to the feedback control loop of Fig. 2 where both the desired and achieved effective road profiles are defined, that is, where the tyre is in contact with the road surface. Where the desired effective road profile is not defined, that is, where the $ERP\text{-}FLAG_{desired}$ is zero, no error exists unless tyre extension is predicted, that is, the achieved response (cylinder 56 of Fig. 2) indicates that the vehicle tyre is not in contact with the road surface, then the effective tyre profile ($ETP_{error}$ is equal to the tyre deflection ($\delta T_v$), and the feedback control loop will eventually remove the tyre extension error.

Graphs depicting a longitudinal tyre deflection, a longitudinal tyre profile, and an effective road profile flag for the longitudinal component as shown, respectively, in Figs. 5A-5C. Both a longitudinal tyre deflection, $\delta_{Tl}$, and a longitudinal effective tyre profile, $ETP_L$, are determined as shown in Figs. 4A and 4B, respectively, in a fashion similar to those parameters for the vertical direction as follows:

$$\delta_{Tl} = [F_{vert. - mz}] * k_T^{-1},$$

where, $\delta_{Tl}$ = vertical tyre deflection, $F_{vert.}$ = vertical force measured at a vehicle spindle, m = at spindle-coupled mass, z = vertical spindle acceleration, and $k_T$ = a tyre stiffness constant.

$$ETP_l = \delta_{Tl} + z$$

where, z = vertical spindle displacement and $ETP_l$ = vertical effective tyre profile.

An effective road profile graph, shown in Fig. 5C, is developed base upon the absolute value of the net longitudinal tyre deflection. If the absolute value of the net longitudinal tyre deflection is greater than a predetermined threshold value, then the effective road profile in the longitudinal direction ($ERP_L$) is set equal to the effective tyre profile in the longitudinal direction ($ETP_L$). However, if the absolute value of the net longitudinal tyre deflection is less than the predetermined threshold, then the effective road profile in the longitudinal direction is undefined, and an effective road profile flag for the longitudinal direction is set equal to zero. An effective tyre profile error, $ETP_{longerror,}$ is determined as follows:

$$ETP_{longerror} = ETP_{desired} * ERP\text{-}FLAG_{desired} \text{ (desired response)}$$
$$- ETP_{achieved} * ERP\text{-}FLAG_{desired} \text{ (composite tracking}$$
$$\text{response)}$$
$$- \delta_{Tl} * [1 - ERP\text{-}FLAG_{achieved}],$$

Where the longitudinal effective road profile is defined, that is, where the tyre is in contact with the road surface, a longitudinal effective tyre profile error is set equal to the difference between a predetermined longitudinal effective tyre profile and a longitudinal component of the generated output form the feedback control loop. That is, if a loss-of-contact condition has not been flagged for the predetermined longitudinal effective tyre profile, the longitudinal effective tyre profile error, or component longitudinal error, is the difference between the desired longitudinal effective tyre profile and the achieved longitudinal effective tyre profile. However, where a loss-of-contact condition is flagged, the longitudinal input error is set equal to a feedback loop longitudinal tyre deflection, that is, $\delta_{Tl}$.

In both the vertical and longitudinal loss-of-contact models described above, a flagged condition essentially corresponds to a situation where the vehicle is modelled as a free transient response.

In one embodiment of the method, a first tyre model is developed for a first vehicle, and a tyre profile is estimated for a road surface over which the first vehicle was driven. An estimate of the tyre profile is made based upon a set of spindle dynamics data for the first vehicle and the first tyre model. A second tyre model is then developed for a second vehicle, and the second vehicle is then coupled to a spindle-coupled simulator. A set of control signals is generated in a feedback control loop for driving the spindle-coupled simulator with the second vehicle attached thereto so that a response generated by the spindle-coupled simulator is consistent with the estimated tyre profile. The set of control signals is generated by selecting a signal for an effective tyre profile error, or composite error, from a generated output from the control loop representing a tyre in contact with the road surface and a tyre deflection representing a tyre having lost contact with the road surface.

The feedback control loop has an input formed by the difference between the predetermined effective tyre profile and the effective tyre profile error from the feedback control loop. A loss-of-contact condition in the predetermined tyre deflection profile is flagged by determining if a dynamic tyre deflection exceeds a pre-load tyre deflection. If a loss-of-contact condition is flagged, a tyre deflection is calculated for use as the defective tyre profile error in the feedback control loop during simulation with the second vehicle coupled to the spindle-coupled simulator. In addition, a loss-of-contact condition can be dynamically flagged for the response generated by the spindle-coupled simulator with the second vehicle attached thereto.

Preferably, the input error in the feedback control loop is comprised of a vertical input error and a longitudinal input error. The vertical input error is set equal to the difference between a predetermined vertical effective tyre profile and the generated output from the feedback control loop if a loss-of-contact condition has not been flagged for either signal, setting the input error to zero where both of the signals have been flagged, and setting the input error to a feedback loop vertical tyre deflection if only the generated output from the feedback control loop has been flagged. The longitudinal input error is set equal to the distance between a predetermined longitudinal effective tyre profile and a longitudinal component of the generated output from the control feedback loop if a loss-of-contact condition has not been flagged for the predetermined longitudinal effective tyre profile. However, the longitudinal input error is set equal to a feedback loop longitudinal tyre deflection if the predetermined longitudinal effective tyre profile has been flagged.

**Claims**

1. A method for controlling an automotive vehicle spindle-coupled road simulator with a predetermined effective tyre profile for a road surface, the method comprising the steps of :

developing a tyre model for a vehicle;
coupling said vehicle to said spindle-coupled simulator; and
generating a set of control signals in a feedback control loop for driving said spindle-coupled simulator with said vehicle attached thereto so that a response generated by said spindle-coupled simulator is consistent with said predetermined effective tyre profile;
**characterised by**
selecting a signal for an effective tyre profile error from a generated output from the control feedback loop representing a tyre in contact with the road surface, and a tyre deflection representing a tyre having lost contact with the road surface.

2. A method for controlling an automotive vehicle spindle-coupled road simulator comprising the steps of:

developing a first tyre model for a first vehicle;
estimating a tyre profile for a road surface over which said first vehicle was driven based upon a set of spindle dynamics data for said first vehicle and said first tyre model;
developing a second tyre model for a second vehicle;
coupling said second vehicle to said spindle-coupled simulator; and
generating a set of control signals in a feedback control loop for driving said spindle-coupled simulator with said second vehicle attached thereto so that a response generated by said spindle-coupled simulator is consistent with said estimated tyre profile,

**characterised in that**
said set of control signals is generated by selecting a signal for an effective tyre profile error from a generated output from the control loop representing a tyre in contact with the road surface and a tyre deflection representing a tyre having lost contact with the road surface.

3. A method according to claim 1 or 2, wherein said feedback control loop has an input formed by the difference between the predetermined effective tyre profile and the effective tyre profile error from the feedback control loop.

4. A method according to claim 1 or 2, including the step of flagging a loss-of-contact condition in said predetermined tyre deflection profile by determining if a dynamic tyre deflection exceeds a pre-load tyre deflection, and calculating a tyre deflection for use as the effective tyre profile error in the feedback control loop when a loss-of-contact condition is flagged.

5. A method according to claim 4, including the step of flagging a loss-of-contact condition in the response generated by the spindle-coupled simulator.

6. A method according to claim 5, wherein the input error is comprised of a vertical input error and a longitudinal input error.

7. A method according to claim 6, including the step of setting the vertical input error to the difference between a predetermined vertical effective tyre profile and the generated output from the control feedback loop if a loss-of-contact condition has not been flagged for either signal, setting the input error to zero where both of the signals have been flagged, and setting the input error to a feedback loop vertical tyre deflection if only the generated output from the feedback control loop has been flagged.

8. A method according to claim 6, including the step of setting the longitudinal input error to the difference between a predetermined longitudinal effective tyre profile and a longitudinal component of the generated output from the control feedback loop if a loss-of-contact condition has not been flagged for the predetermined longitudinal effective tyre profile, and setting the longitudinal input error to a feedback loop longitudinal tyre deflection if the predetermined longitudinal effective tyre profile has been flagged.

9. A system for simulating a road test of an automotive vehicle, the system comprising:

a spindle-coupled simulator adapted to receive the vehicle thereon;
electronic memory means for storing a set of data representing a desired response from a source vehicle driven over a road surface; and
feedback control loop code means for driving the spindle-coupled simulator,

**characterised by**

loss-of-contact code means for selecting a feedback signal from among a generated output from the spindle-coupled simulator representing a tyre in contact with the road surface and a tyre deflection representing a tyre having lost contact with the road surface.

**Patentansprüche**

1. Verfahren zur Steuerung eines an die Achszapfen eines Kraftfahrzeuges gekoppelten Fahrbahnsimulators mit einem vorgegebenen effektiven Reifenprofil für eine Fahrbahnoberfläche, welches Verfahren die folgenden Schritte umfaßt:

   Entwickeln eines Reifenmodells für ein Fahrzeug;
   Ankuppeln des besagten Fahrzeuges an besagten achszapfenfest gekoppelten Simulator; und
   Erzeugen eines Satzes von Steuersignalen in einer Rückkopplungsregelschleife zum Betrieb des besagten achszapfenfest gekoppelten Simulators, wobei besagtes Fahrzeug daran angekoppelt ist, so daß eine von besagtem achszapfengekoppeltem Simulator erzeugte Reaktion im Einklang mit besagtem vorgegebenem effektivem Reifenprofil steht;
   **gekennzeichnet durch** :
   die Wahl eines Signals für einen effektiven Reifenprofilfehler zwischen einem generierten Ausgang der Regel-Rückkopplungsschleife, welcher einen Reifen in Kontakt mit der Fahrbahnoberfläche darstellt, und einer Reifenauslenkung, welche einen Reifen darstellt, der den Kontakt mit der Fahrbahnoberfläche verloren hat.

2. Verfahren zur Steuerung eines an den Achszapfen eines Kraftfahrzeuges angekoppelten Fahrbahnsimulators, welches Verfahren folgende Schritte beinhaltet:

   Entwickeln eines ersten Reifenmodells für ein erstes Fahrzeug;
   Schätzen eines Reifenprofils für eine Fahrbahnoberfläche, über welche das besagte erste Fahrzeug gefahren wurden, ausgehend von einem Satz von Achszapfen-Dynamikdaten für besagtes erstes Fahrzeug und besagtes erstes Reifenmodell; Entwickeln eines zweiten Reifenmodells für ein zweites Fahrzeug;
   Ankuppeln des besagten zweiten Fahrzeuges an besagten achszapfenfest gekoppelten Simulator; und
   Erzeugen eines Satzes von Steuersignalen in einer Rückkopplungsregelschleife zum Betreiben des besagten achszapfenfest gekoppelten Simulators mit besagtem daran angekuppelten zweiten Fahrzeug, so daß eine von besagtem achszapfenfestem Simulator generierte Reaktion im Einklang mit besagtem geschätztem Reifenprofil steht;
   **dadurch gekennzeichnet, daß**
   besagter Satz von Steuersignalen erzeugt wird durch die Wahl eines Signals für einen effektiven Reifenprofilfehler zwischen einem generierten Ausgang der Regelschleife, welcher einen in Kontakt mit der Fahrbahnoberfläche befindlichen Reifen darstellt, und einer Reifenauslenkung, welche einen Reifen darstellt, der den Kontakt mit der Fahrbahnoberfläche verloren hat.

3. Verfahren nach Anspruch 1 oder 2, worin besagte Rückkopplungsregelschleife einen Eingang beinhaltet, welcher aus der Differenz zwischen dem vorgegebenen effektiven Reifenprofil und dem effektiven Reifenprofilfehler aus der Rückkopplungsregelschleife gebildet wird.

4. Verfahren nach Anspruch 1 oder 2, den Schritt des Setzens eines Merkers eines Kontaktverlust-Zustandes in besagtem Reifenauslenkungsprofil beinhaltend, indem bestimmt wird, ob eine dynamische Reifenauslenkung eine Vorlast-Reifenauslenkung überschreitet, und dann eine Reifenauslenkung für den Einsatz als der effektive Reifenprofilfehler in der Rückkopplungsregelschleife berechnet wird, wenn ein Merker für einen Kontaktverlust-Zustand gesetzt worden ist.

5. Verfahren nach Anspruch 4, den Schritt des Setzens eines Merkers eines Kontaktverlust-Zustandes in der von dem achszapfenfest gekoppelten Simulator generierten Reaktion beinhaltend.

6. Verfahren nach Anspruch 5, worin der eingangsseitige Fehler aus einem Vertikal-Eingangsfehler und einem Längs-Eingangsfehler besteht.

7. Verfahren nach Anspruch 6, den Schritt der Einstellung des Vertikal-Eingangsfehlers auf die Differenz zwischen einem effektiven vertikalen Reifenprofil und dem generierten Ausgang der Regel-Rückkopplungsschleife beinhaltend, wenn für keines der beiden Signale ein Merker für einen Kontaktverlust-Zustand gesetzt worden ist, und der Einstellung des Eingangsfehlers auf Null, wenn für beide Signale ein Merker gesetzt worden ist, und der Einstellung des Eingangsfehlers auf eine vertikale Reifenauslenkung in der Rückkopplungsschleife, wenn ein Merker nur für den generierten Ausgang von der Rückkopplungsregelschleife gesetzt worden ist.

8. Verfahren nach Anspruch 6, den Schritt der Einstellung des Längs-Eingangsfehlers auf die Differenz zwischen einem vorgegebenen effektiven Längs-Reifenprofil und einer Längskomponente des generierten Ausganges der Regel-Rückkopplungsschleife beinhaltend, wenn kein Merker eines Kontaktverlust-Zustandes für das vorgegebene effektive Längs-Reifenprofil gesetzt worden ist, und der Einstellung des Längs-Eingangsfehlers auf eine Längs-Reifenauslenkung der Rückkopplungsschleife, wenn ein Merker für das vorgegebene effektive Längs-Reifenprofil gesetzt worden ist.

9. System zur Simulation eines Fahrbahntests eines Kraftfahrzeuges, welches System folgendes beinhaltet:

  einen an die Achsschenkel gekoppelten Simulator, der ausgelegt ist, das Fahrzeug darauf aufzunehmen; elektronische Speichermittel zur Speicherung eines Datensatzes, welcher eine Soll-Reaktion von einem über eine Fahrbahnoberfläche gefahrenen Quellfahrzeug darstellt; und Rückkopplungsregelschleifen-Codemittel zum Betreiben des achszapfenfest gekoppelten Simulators;
  **gekennzeichnet durch**:

  Kontaktverlust-Codemittel zur Wahl eines Rückkopplungssignals zwischen einem generierten Ausgang vom achszapfenfest gekoppelten Simulator, welches einen in Kontakt mit der Fahrbahnoberfläche befindlichen Reifen darstellt, und einer Reifenauslenkung, welche einen Reifen darstellt, der den Kontakt mit der Fahrbahnoberfläche verloren hat.

## Revendications

1. Procédé de contrôle ou de commande d'un simulateur de route d'un véhicule automobile à couplage axial, avec un profil de pneu efficace ou effectif prédéterminé pour une surface routière, le procédé comprenant les étapes consistant à :

  développer un modèle de pneu pour un véhicule ;
  coupler ledit véhicule avec ledit simulateur à couplage axial; et
  produire un ensemble de signaux de contrôle ou de commande dans une boucle de contrôle ou de commande de retour pour entraîner ledit simulateur à couplage axial avec ledit véhicule auquel il est couplé ou attaché, de sorte qu'une réponse produite par ledit simulateur à couplage axial soit cohérente avec ledit profil de pneu efficace ou effectif prédéterminé ;
  **caractérisé par** l'étape consistant à
  sélectionner un signal pour une erreur de profil de pneu efficace ou effectif à partir d'une sortie produite provenant de la boucle de contrôle ou de commande de retour, qui représente un pneu en contact avec la surface routière, et une déformation ou une déviation de pneu représentant un pneu ayant perdu le contact avec la surface routière.

2. Procédé de contrôle d'un simulateur de route d'un véhicule automobile à couplage axial comprenant les étapes consistant à :

  développer un premier modèle de pneu pour un premier véhicule ;
  estimer un profil de pneu pour une surface routière sur laquelle ledit premier véhicule a été conduit, à partir d'un ensemble de données dynamiques d'axe pour ledit premier véhicule et ledit premier modèle de pneu ;
  développer un deuxième modèle de pneu pour un deuxième véhicule ;
  coupler ledit deuxième véhicule audit simulateur à couplage axial ; et
  produire un ensemble de signaux de contrôle ou de commande dans une boucle de contrôle ou de commande de retour pour entraîner ledit simulateur à couplage axial avec ledit deuxième véhicule auquel il est couplé ou attaché, de sorte qu'une réponse produite par ledit simulateur à couplage axial soit cohérente avec ledit profil de pneu estimé ;
  **caractérisé en ce que**
  ledit ensemble de signaux de contrôle ou de commande est produit en sélectionnant un signal pour une erreur de profil de pneu efficace ou effectif à partir d'une sortie produite provenant de la boucle de contrôle ou de commande, représentant un pneu en contact avec la surface routière, et une déformation ou une déviation de pneu qui représente un pneu ayant perdu le contact avec la surface routière.

3. Procédé selon la revendication 1 ou 2, dans lequel ladite boucle de contrôle ou de commande de retour possède une entrée formée par la différence entre le profil de pneu efficace ou effectif prédéterminé et l'erreur de profil de pneu efficace ou effectif provenant de la boucle de contrôle ou de commande de retour.

4. Procédé selon la revendication 1 ou 2, comprenant l'étape consistant à indiquer un état ou une condition de perte de contact dans ledit profil de déformation ou de déviation de pneu prédéterminé, en déterminant si une déformation ou une déviation de pneu dynamique excède une déformation ou une déviation de pneu en pré - charge, et en calculant une déformation ou déviation de pneu pour utilisation en tant qu'erreur de profil de pneu efficace ou effectif dans la boucle de contrôle ou de commande de retour lorsqu'un état ou une condition de perte de contact est indiqué ou indiquée.

5. Procédé selon la revendication 4, comprenant l'étape consistant à indiquer un état ou une condition de perte de contact dans la réponse produite par le simulateur à couplage axial.

6. Procédé selon la revendication 5, dans lequel l'erreur en entrée consiste en une erreur en entrée verticale et une erreur en entrée longitudinale.

7. Procédé selon la revendication 6, comprenant l'étape consistant à régler l'erreur en entrée verticale au niveau de la différence entre un profil de pneu efficace ou effectif vertical prédéterminé et la sortie produite provenant de la boucle de contrôle ou de commande de retour si un état ou une condition de perte de contact n'a été indiqué ou indiquée ni pour un signal ni pour l'autre, régler l'erreur en entrée à zéro lorsque ou où les deux signaux ont été indiqués, et régler l'erreur en entrée au niveau d'une déformation ou déviation de pneu verticale de boucle de contrôle ou de commande si seule la sortie produite provenant de la boucle de contrôle ou de commande de retour a été indiquée.

8. Procédé selon la revendication 6, comprenant l'étape consistant à régler l'erreur en entrée longitudinale au niveau de la différence entre un profil de pneu efficace ou effectif longitudinal prédéterminé et une composante longitudinale de la sortie produite provenant de la boucle de contrôle ou de commande de retour si un état ou une condition de perte de contact n'a pas été indiqué pour le profil de pneu efficace ou effectif longitudinal prédéterminé, et régler l'erreur en entrée longitudinale au niveau d'une déformation ou déflection de pneu longitudinale de boucle de contrôle ou de commande si le profil de pneu efficace longitudinal prédéterminé a été indiqué.

9. Système pour simuler un essai routier d'un véhicule automobile, le système comprenant :

un simulateur à couplage axial adapté pour recevoir sur lui le véhicule ;
un moyen de mémoire électronique pour enregistrer un ensemble de données, représentant une réponse souhaitée provenant d'un véhicule source qui a été conduit sur une surface routière ; et
un moyen de boucle de contrôle ou de commande de retour pour entraîner le simulateur à couplage axial, **caractérisé par**
un moyen à code de perte de contact pour sélectionner un signal de retour parmi une sortie produite provenant du simulateur à couplage axial, représentant un pneu en contact avec la surface routière, et une déformation ou déviation de pneu qui représente un pneu ayant perdu contact avec la surface routière.

SYSTEM
RESPONSE

LOSS-OF-CONTACT
CONTROL LOGIC

TRACKING
RESPONSE

CONTROL INPUT

SYSTEM
CONTROLLER

SET FLAG FOR
DESIRED DATA

DESIRED
RESPONSE

## FIG. 1

FIG.2

FIG. 3

FIG. 4A

FIG. 4B

FIG. 4C

FIG. 5A

FIG. 5B

FIG. 5C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5610330 A

- US 4981034 A